# EUROPEAN PATENT APPLICATION

(11) **EP 4 497 506 A2**
(43) Date of publication of application: **29.01.2025**
(21) Application number: 24188327.1
(22) Date of filing: 12.07.2024
(51) Int. Cl.: B01L 7/00

(54) **ACCESSORY FOR COLORIMETRIC DIAGNOSTICS AND RELATED SYSTEMS AND METHODS**

(30) Priority: 13.07.2023 US 202363513515 P
(71) Applicant: Analog Devices, Inc., Wilmington, MA 01887 (US)
(72) Inventor: PITTMAN, Jay Maxson, Wilmington, 01887 (US); CHAUHAN, Hari, Wilmington, 01887 (US); AZIZE, Mohamed, Wilmington, 01887 (US); CHOI, Kyungyong, Wilmington, 01887 (US)
(74) Representative: Yang, Shu

(57) **Abstract**

The present disclosure provides a nucleic acid amplification test molecular diagnostic device. In this respect, a system can include a reusable base component having a heater and a disposable component including a reaction chamber and a sample receiving portion that is fluidly coupled to the reaction chamber. The base component can heat a sample fluid within the reaction chamber. Light can be directed to the reaction chamber, and light can be transmitted light from the reaction chamber to an optical detector. Data may be transmitted to an external device. Certain devices may be used for at home or point-of-care testing, and some devices may be used for laboratory testing.

## Description

### INCORPORATION BY REFERENCE TO ANY PRIORITY APPLICATIONS

Any and all applications for which a foreign or domestic priority claim is identified in the Application Data Sheet as filed with the present application are hereby incorporated by reference under 37 CFR 1.57. This application claims the benefit of priority of U.S. Provisional Application No. 63/513,515, entitled "Accessory for Camera-Based Colorimetric Diagnostics and Related Systems and Methods," filed July 13, 2023, the content of which is hereby incorporated by reference herein in its entirety and for all purposes.

### BACKGROUND

### Technical Field

This disclosure relates to medical diagnostic testing. In particular, some embodiments are directed to apparatuses and methods for performing medical diagnostic testing using consumer electronics hardware. Some embodiments are directed to partially reusable nucleic acid amplification molecular diagnostic devices and methods for using the same.

### Description of the Related Art

Existing diagnostic testing methods can have several disadvantages, such as high cost, production of waste, limited testing capabilities, and long waiting times to obtain results. Accordingly, there is a need for improved testing methods and devices.

### SUMMARY

One aspect of the present disclosure is a nucleic acid amplification test molecular diagnostic device. The nucleic acid amplification test molecular diagnostic device includes a reusable base component comprising a heater, and a disposable component including a reaction chamber and a sample receiving portion fluidly coupled to the reaction chamber. The nucleic acid amplification test molecular diagnostic device can heat a fluid within the reaction chamber with the heater. The nucleic acid amplification test molecular diagnostic device can direct light from a light source to the reaction chamber. The nucleic acid amplification test molecular diagnostic device can transmit light from the disposable component to an optical detector.

In some examples, an external device includes the light source and the optical detector, the optical detector is a camera, and the light source and the camera are in optical communication with the reaction chamber via a light transmission path of the reusable base component. The nucleic acid amplification test molecular diagnostic device can further include an electrical connection interface that can connect to the external device. The reusable base component can receive power from the external device via the electrical connection interface. The nucleic acid amplification test molecular diagnostic device can include a wireless communications interface that can communicate with the external device. The disposable component includes an attachment portion that can attach to an additional disposable component. The reusable base component can receive a plurality of disposable components. The plurality of disposable components can include the disposable component. The reusable base component can include the light source and the optical detector. The optical detector can transmit data to an external device. The nucleic acid amplification test molecular diagnostic device can include a sensor that can sense a change in a sample in the reaction chamber. The sensor can be an electrochemical sensor. The nucleic acid amplification test molecular diagnostic device can include a waveguide that can direct light from the light source to the reaction chamber. The waveguide can direct light from the reaction chamber to the optical detector. The disposable component can include a plurality of reaction chambers. The plurality of reaction chambers can include the reaction chamber.

In some examples, the nucleic acid amplification test molecular diagnostic device can include a rotatable platform, and at least one additional reaction chamber. The reaction chamber and the at least one additional reaction chamber can be disposed on a top surface of the rotatable platform. The nucleic acid amplification test molecular diagnostic device can include a plurality of fiber optic cables, and at least one additional reaction chamber. Each one of the plurality of fiber optic cables can optically couple to a corresponding one of the reaction chambers.

The reaction chamber includes at least one reagent. The heater can maintain a set temperature for a set time. The heater can provide variable heat output for thermal cycling.

One aspect of the present disclosure is a method for performing a diagnostic test. The method includes receiving, by a nucleic acid amplification molecular diagnostic device, an indication from an external device to turn on a heater of the nucleic acid amplification molecular diagnostic device; turning on, by the nucleic acid amplification molecular diagnostic device, the heater of the nucleic acid amplification molecular diagnostic device; receiving, by the nucleic acid amplification molecular diagnostic device from the external device, an indication to turn off the heater of the nucleic acid amplification molecular diagnostic device; and turning off, by the nucleic acid amplification molecular diagnostic device, the heater of the nucleic acid amplification molecular diagnostic device.

The method can include sensing, by a sensor of the nucleic acid amplification molecular diagnostic device from the external device, a change in a sample in a reaction chamber of the nucleic acid amplification molecular diagnostic. The method can include providing an indication of the change in the sample to the external device. The method can include receiving, by the nucleic acid amplification molecular diagnostic device from the external device, an indication to rotate a rotatable platform of the nucleic acid amplification molecular diagnostic device. The method can further include providing power to a motor to cause the rotatable platform to rotate. The method can include receiving, from the external device, light from a light source of the external device; and transmitting, from the nucleic acid amplification molecular diagnostic device to a camera element of the external device, light, the light passing through a reaction chamber of the nucleic acid amplification molecular diagnostic device.

One aspect of the present disclosure is a method for performing a diagnostic test. The method can include controlling, by an external device, a heating element of reusable component of a nucleic acid amplification molecular diagnostic device to heat a fluid in a sample chamber of a disposable component of the nucleic acid amplification molecular diagnostic device; providing, by the external device, light to the nucleic acid amplification molecular diagnostic device for illuminating the fluid in the sample chamber; and detecting, with a camera of the external device, a change in color of the fluid, wherein the change in color is associated with the fluid comprising a particular pathogen.

One aspect of the present disclosure is a method for performing diagnostic tests. The method can include heating a fluid in at least one reaction chamber; directing light to the at least one reaction chamber; and providing a plurality of optical outputs each associated with a different pathogen for detecting whether the fluid in the at least one reaction chamber includes any of the different pathogens.

### BRIEF DESCRIPTION OF THE DRAWINGS

These and other features, aspects, and advantages of the disclosure are described with reference to drawings of certain embodiments, which are intended to illustrate, but not to limit, the present disclosure. It is to be understood that the accompanying drawings, which are incorporated in and constitute a part of this specification, are for the purpose of illustrating concepts disclosed herein and may not be to scale.
FIG. 1 illustrates an example nucleic acid amplification molecular diagnostic device according to some embodiments. The example nucleic acid amplification molecular device of FIG. 1 may be used for at-home or point-of-care testing.
FIG. 2 illustrates another nucleic acid amplification molecular diagnostic device according to some embodiments.
FIG. 3 illustrates another nucleic acid amplification molecular diagnostic device according to some embodiments.
FIG. 4 illustrates another example nucleic acid amplification molecular diagnostic device according to embodiments. The example nucleic acid amplification molecular device of FIG. 4 may be used for laboratory-based testing.

### DETAILED DESCRIPTION OF CERTAIN EMBODIMENTS

Although several embodiments, examples, and illustrations are disclosed below, it will be understood by those of ordinary skill in the art that the disclosure described herein extends beyond the specifically disclosed embodiments, examples, and illustrations and includes other uses of the disclosure and obvious modifications and equivalents thereof. Embodiments are described with reference to the accompanying figures, wherein like numerals refer to like elements throughout. The terminology used in the description presented herein is not intended to be interpreted in any limited or restrictive manner simply because it is being used in conjunction with a detailed description of some specific embodiments of the disclosure. In addition, embodiments can comprise several novel features. No single feature is solely responsible for its desirable attributes or is essential to practicing the disclosure herein described. It will be understood that elements illustrated in the figures are not necessarily drawn to scale. Moreover, it will be understood that certain embodiments can include more elements than illustrated in a drawing and/or a subset of the illustrated elements. Further, some embodiments can incorporate any suitable combination of features from two or more drawings.

Molecular diagnostic testing can provide many benefits by enabling the accurate and rapid detection of a wide array of pathogens. Molecular diagnostic testing can involve the analysis of nucleic acids, for example DNA and/or RNA, to identify particular genetic sequences associated with a pathogen. Molecular diagnostic testing can be highly specific and highly sensitive.

Molecular diagnostic testing can be important in infectious disease diagnosis, monitoring, and so forth. For example, traditional methods such as culturing and microscopy can be time-consuming, inaccurate, or both. In contrast, molecular diagnostic testing can enable the rapid and specific identification of infectious agents. Molecular diagnostic testing can also be used for monitoring. For example, molecular diagnostic testing can be used to monitor a patient's response to treatment.

Typically, molecular diagnostic methods for viral detection have been lab-based, which can involve trained personnel and specialized equipment, for example, for conducting real-time polymerase chain reaction testing (also referred to herein as RT-PCR or RT-qPCR). In some cases, at-home or point-of-care testing can be available. However, certain at-home or point-of-care testing (e.g., antigen testing) can use platforms that are one-time use, insensitive, prone to false positives, and/or expensive.

Lab-based RT-qPCR can provide highly accurate, specific detection of pathogens. However, RT-qPCR can utilize skilled personnel and specialized laboratory equipment. Typical turnaround times for results from such tests can be from about a day to about three days or more. Such long time periods can be problematic in some cases, such as for the early detection of infectious diseases. Early detection can be important for numerous reasons. For example, early detection can enable health authorities to respond to infectious disease outbreaks to slow or stop the spread, and faster results can enable earlier intervention. As another example, some treatments for infectious diseases may be less effective if treatment is not started soon after infection.

As mentioned above, in some cases, at-home or point-of-care testing can be provided. For example, in some cases, an individual can use a reverse transcription loop-mediated isothermal amplification test at home. Such testing systems can, in some cases, take about thirty minutes to produce results. However, such systems typically can involve a reader to obtain results. Thus, such systems can be expensive and/or environmentally unfriendly. Moreover, such systems may only offer optical detection, which may lead to inaccurate results.

In some cases, an individual can use a lateral flow-based test at home or at a point of care. Such systems typically can take an hour or more to produce results. Such systems can have relatively low limits of detection and relatively high false positive rates.

Aspects of this disclosure relate to a nucleic acid amplification molecular diagnostic device that comprises a reusable heater platform and a disposable component. The nucleic acid amplification molecular diagnostic device can facilitate a thermally driven nucleic acid amplification test (NAAT) reaction. In some embodiments, the nucleic acid amplification molecular diagnostic device can be configured to operate in conjunction with a consumer electronics device such as a smartphone, tablet, laptop, desktop, and/or the like. The nucleic acid amplification molecular diagnostic device can use the consumer electronic device as the reader for one or more of image processing, diagnostic read-out, or data storage. In some embodiments, the reusable heater platform can be configured to receive the disposable component. For example, in some embodiments, the disposable component can fit into a slot, opening, or other portion of the reusable component configured to receive the disposed component.

In some embodiments, the disposable component can include one or more reaction chambers. In some embodiments, the one or more reaction chambers can contain one or more reagents for performing NAAT. In some embodiments, a reagent can be a lyophilized reagent. Multiple reactions can include NAAT components to amplify genetic material if a target sequence is introduced. In some embodiments, a sample, which can include biological material, can be delivered via a sterile swab to a test tube or other container having an extraction buffer therein. The extraction buffer can extract target genetic material. In some embodiments, the sample may be flowed from the test tube or other container into the reaction chamber, for example, by piercing a hole into a bottom surface of the test tube or other container.

The disposable component may include a circular polymer, for example polyethylene terephthalate (PET), poly(methyl methacrylate) (PMMA), or polyimide (PI). The disposable component may include a dielectric, for example SiN or SiO₂. The disposable component may include a semiconductor wafer (e.g., a silicon wafer) on which the dielectric is layered. The disposable component can include two or more of a group consisting of a circular polymer, a dielectric, and a dielectric on a semiconductor wafer. The semiconductor wafer may include an integrated heater. Wells of the disposable component may comprise polymers, plastics, and/or dielectric layers. In some examples, a dielectric layer of the wells may be integrated into a semiconductor wafer of the disposable component. The heater of the disposable component may be a Joule heater (e.g., heat can be generated by driving current through a metal of the heater). In some examples, the heater may include metals such as noble metals, for example gold.

In some embodiments, colorimetric analysis can be used to detect the presence of a pathogen in a reaction chamber. When a reaction occurs, the color of the reaction mixture can change via a colorimetric dye or emit via a fluorescently-labeled genetic material-specific (e.g., DNA- or RNA-specific) probe. In some embodiments, when the reaction starts via an application on the consumer electronics device, a camera and light of the consumer electronics device (e.g., smartphone) may be used to monitor amplification in the reaction chambers. In some embodiments, the reaction can be monitored continuously or periodically. In some embodiments, the reaction may take place over a fixed time period, and one or more images may be captured at the end of the reaction process or at a pre-determined point in the reaction process.

In some embodiments, a nucleic acid amplification molecular diagnostic device can provide one or more of ease of use, fast results, high sensitivity, reusability, or multiplexing. For example, ease of use can be facilitated by a companion application (e.g., a smartphone application) that can be used to control a nucleic acid amplification molecular diagnostic device and/or for detection. In some embodiments, the nucleic acid amplification molecular diagnostic device can communicate over one or more communications protocols such as, for example and without limitation, USB, Wi-Fi, and/or Bluetooth. In some embodiments, a nucleic acid amplification molecular diagnostic device can provide rapid test results, for example, less than about fifteen minutes, for example, about ten minutes. In some embodiments, a nucleic acid amplification molecular diagnostic device can use optical detection. In some embodiments, a nucleic acid amplification molecular diagnostic device can combine optical detection and one or more other detection methods, as described in more detail herein. In some embodiments, a nucleic acid amplification molecular diagnostic device can include reusable components as described in more detail herein. In some embodiments, a nucleic acid amplification molecular diagnostic device can have relatively minimal components. For example, in some embodiments, a nucleic acid amplification molecular diagnostic device can make use of a smartphone or other device for control, power, and/or the like.

In some embodiments, a nucleic acid amplification molecular diagnostic device can use components included in the smartphone or other device. For example, in some embodiments, the light of a smartphone (e.g., a camera flash) can be used for illumination. In some embodiments, optical data can be obtained using the camera embedded in a smartphone, tablet, or other device. In some embodiments, testing data (e.g., optical data) can be processed on the smartphone or other device to determine test results. In some embodiments, testing data can be uploaded to a remote computing system for analysis. In some embodiments, the nucleic acid amplification molecular diagnostic device can use multiplexing as described in more detail herein. Multiplexing can enable multiple tests for multiple pathogens and/or multiple tests for a same pathogen to be conducted in a single run.

Advantageously, embodiments disclosed herein can be readily adapted to meet desired sensitivity, cost, or other design specifications. In some embodiments, a nucleic acid amplification molecular diagnostic device can be configured for isothermal heating, thermal cyclic heating, or both. In some embodiments, the nucleic acid amplification molecular diagnostic device can include one or more waveguides, fiber optic cables, and so forth to direct light into a reaction chamber and/or direct light from the reaction chamber to an optical detector (e.g., a camera) on the consumer electronics device. In some embodiments, the nucleic acid amplification molecular diagnostic device can be configured to enable one or more of RGB spectral analysis, hyperspectral analysis, optical density/turbidity analysis, and so forth. In some embodiments, the nucleic acid amplification molecular diagnostic device can include a broadband light source. In some embodiments, the nucleic acid amplification molecular diagnostic device can use the consumer electronics device's light source (e.g., a camera flash of a smartphone).

In some embodiments, the nucleic acid amplification molecular diagnostic device can include a reusable heating platform. In some embodiments, the nucleic acid amplification molecular diagnostic device can be a multiplexed nucleic acid amplification molecular diagnostic device and may include one reaction chamber or multiple reaction chambers. In some multi-chamber embodiments, the chambers can be disposed on a rotatable platform within the nucleic acid amplification molecular diagnostic device. In some embodiments, the rotatable platform can be motorized and can be configured to move from one chamber to another in an automated fashion. In some embodiments, the rotatable platform can be manually rotated to select a chamber for analysis. In some embodiments, the rotatable platform can be mechanically coupled to a motor (e.g., an electric motor). In some embodiments, a central axis of the rotatable platform can be coupled to the motor such that the motor can cause the rotatable platform to rotate about the central axis of the rotatable platform. In some embodiments, the rotatable platform can be rotatably coupled to a support structure such as a central pin, and a motor can be attached to a roller that is in contact with a side surface of the rotatable platform, such that rotation of the roller causes the rotatable platform to rotate. In some multi-chamber embodiments, the nucleic acid amplification molecular diagnostic device can include waveguides, fiber optic cables, and so forth to direct light to particular chambers.

In some embodiments, the consumer electronics device (e.g., a smartphone) can control the testing process. In some embodiments, the nucleic acid amplification molecular diagnostic device can include minimal electronics to process commands from the consumer electronics device. For example, the nucleic acid amplification molecular diagnostic device can be configured to open or close a shutter, turn a heater on or off, rotate a platform, select a color filter, and so forth in response to commands from the consumer electronics device. In some embodiments, an application on the consumer electronics device can be configured to process images captured by a camera of the consumer electronics device to determine testing results. In some embodiments, an application running on the consumer electronics device can be configured to upload data to a cloud service for processing and/or storage.

In some embodiments, one or more other detection methods can be used in addition or alternatively to optical sensing. In some examples, amplification detection can be supported by electrical sensing. In some examples, amplification detection can be supported by electrochemical sensing. In certain examples, such electrical or electrochemical detection can be conducted via a functionalized nanomaterial included in the reaction chambers. The functionalized nanomaterial may be a pH-sensitive functionalized carbon nanomaterial. The functionalized nanomaterial can sense changes in current of the sample due to pH changes that result in the sample due to nucleic acid amplification. Amplification detection by two or more modes (i.e. via colorimetric methods and electrical/electrochemical methods) can help reduce false positives and/or false negatives. The disposable can be multiplexed to test for multiple pathogens by using multiple reaction chambers. In some embodiments, a nucleic acid amplification molecular diagnostic device can include one or more electrical transducers. The electrical transducers may be capable of electrochemical sensing. In some embodiments, the one or more electrical transducers can be used to perform analysis such as amperometry and/or potentiometry. In some embodiments, such electrical measurements can be used in conjunction with optical sensing. Such embodiments may provide more robust results, as cross-checking optical sensing with electrical measurements can reduce false positive rates. In some embodiments, a nucleic acid amplification molecular diagnostic device can include an electrical transducer. In some embodiments, the electrical transducer can include two electrodes and can be used to measure a potential difference between the two electrodes. In some embodiments, the electrical transducer can include three electrodes including a working electrode, a reference electrode, and a counter electrode, and the transducer can be configured to measure a current between the working electrode and the counter electrode.

While some embodiments herein are designed to use a light source and detector provided by a consumer electronics devices, such as the flash and camera of a smartphone, the nucleic acid amplification molecular diagnostic device can include light sources, light filters (e.g., color filters), and/or photodetectors in some other embodiments. For example, a light source can be a white LED, broadband light source, and so forth. Optical filters (e.g., color filters) can be used to select particular wavelengths or ranges of wavelengths of light to which a sample is exposed and/or to filter light received from a sample. In some embodiments, a nucleic acid amplification molecular diagnostic device may include a photodetector. Including a photodetector can have several advantages. For example, a smartphone camera may include optical filters that can remove some types of light, such as infrared, ultraviolet, and so forth. In some cases, it may be desirable to detect such light. In some embodiments, multi-spectral, hyperspectral, or other forms of optical data collection can be used, which a conventional camera sensor, such as those found in smartphones, may be poorly suited for.

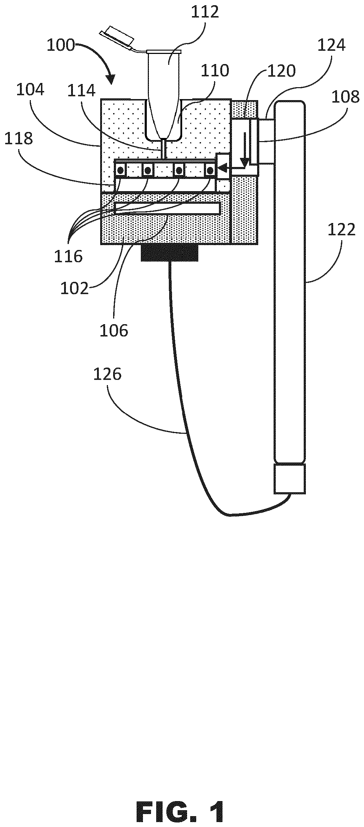

**FIG.** 1 illustrates an example nucleic acid amplification molecular diagnostic device according to some embodiments. In FIG. 1, a nucleic acid amplification molecular diagnostic device 100 can include a reusable base component 102 and a disposable component 104. The reusable base component 102 can include a heater 106. The heater 106 can be, for example, a resistive heater. Any other suitable heater can alternatively or additionally be utilized. The heater 106 can provide isothermal heating at a certain temperature in certain applications. Alternatively or additionally, the heater 106 can thermally cycle a sample. The reusable base component 102 can be configured to mechanically attach to an external device (e.g., a smartphone) via a connection interface 108. While shown as attaching to the camera 124 of the external device 122 in FIG. 1, it will be appreciated that other attachment methods are contemplated. For example, the reusable base component 102 can attach to the external device 122 via hooks, clips, hook-and-loop fasteners, or any other suitable removable attached means. The system nucleic acid amplification molecular diagnostic device 100 may be particularly suitable for at-home testing or point-of-care testing.

The disposable component 104 can include a receiving well 110 for receiving a sample container 112. When the sample container 112 is placed in the receiving well 110, fluid can flow from the sample container 112 to the reaction chambers 116 via one or more fluid connection channels 114. The reaction chambers 116 can include different primers for detecting different pathogens. The reaction chambers 116 can be mounted on a rotatable platform 118. In some embodiments, the rotatable platform 118 can be coupled to a motor. The motor can be disposed in the reusable base component 102 or in the disposable component 104 (for example, just below the rotatable platform 118 and coupled directly to the rotatable platform 118 or located elsewhere within the disposable component 104 and indirectly coupled to the rotatable platform 118, for example, via gears, rods, and/or other mechanical connections to translate the motion of the motor into rotation of the rotatable platform 118.

The reaction chambers 116 may include sensors and/or materials for non-optical detection in accordance with the present disclosure. For example, in some embodiments, the reaction chambers 116 may include sensors capable of sensing electrical changes in the sample in accordance with the present disclosure.

The nucleic acid amplification molecular diagnostic device 100 can include a light transmission path 120 configured to receive light from a light source (e.g., a light source of an external device 122 (e.g., a smartphone). Though in some embodiments the external device 122 is a mobile device or smartphone, it is to be understood that the external device 122 can be any suitable device having a processor and a camera element 124 (e.g., a tablet). In some embodiments, the light transmission path 120 can provide light from the nucleic acid amplification molecular diagnostic device 100 (e.g., from the disposable component 104 and/or the reaction chambers 116 of the disposable component 104) to a camera element 124 of the external device 122. The camera element 124 is an example of an optical detector. The external device 122 can alternatively or additionally include any other suitable optical detector. In some embodiments, light can be selectively transmitted to and/or received from an individual reaction chamber of the reaction chambers 116. For example, in the illustrated embodiment, light can be coupled into to rightmost reaction chamber 116 but may not be transmitted to other reaction chambers 116. In some embodiments, light can be received from the rightmost reaction chamber 116 but may not be received from the other reaction chambers 116. In some embodiments, the coupling can result in no, substantially no, or minimal light being transmitted to or received from reaction chambers 116 other than the rightmost reaction chamber 116. The rotatable platform 118 can be rotated such that the rightmost reaction chamber 116 changes.

In some embodiments, the nucleic acid amplification molecular diagnostic device 100 can be electrically connected to the external device 122 by a cable 126. The cable 126 can be, for example, a USB cable, Lightning cable, and/or the like. In some embodiments, the cable 126 can be used to provide power to the nucleic acid amplification molecular diagnostic device 100, for example, to provide power to the heater 106. In some embodiments, the cable 126 can be used to provide power to one or more other components of the nucleic acid amplification molecular diagnostic device 100. For example, the nucleic acid amplification molecular diagnostic device 100 can include one or more motors, control circuits, communications circuits (e.g., a wireless communications interface, for example Wi-Fi, Bluetooth, and so forth). In some embodiments, the cable 126 may not be present. For example, in some embodiments, rather than or in addition to receiving power from the external device 122, the nucleic acid amplification molecular diagnostic device 100 can include a battery (for example in the reusable base component 102) that can be used to provide power to circuitry of the nucleic acid amplification molecular diagnostic device 100.

In some such embodiments, the nucleic acid amplification molecular diagnostic device 100 can wirelessly communicate with the external device 122 (e.g., a smartphone) via a wireless communication interface (not illustrated). The wireless communication interface can be disposed in, for example, the reusable base component 102. In some embodiments, alternatively or additionally, the nucleic acid amplification molecular diagnostic device 100 can be in communication with the external device 122 via a wired connection, such as via the cable 126.

The external device 122 can detect a color change in a sample to determine that the sample includes a pathogen. For example, the camera 124 of the external device 122 can detect that a fluid in a particular chamber 116 changes from pink to yellow to indicate that a particular pathogen is present in the fluid.

Nucleic acid amplification molecular diagnostic devices disclosed herein can use multiplexing to test for multiple pathogens in a sample. For example, a sample can be tested for multiple respiratory pathogens, such as flu A, flu B, SARS-CoV-2, respiratory syncytial virus (RSV), etc. In certain applications, a sample can be tested for at least 2, at least 3, at least 4, or at least 6 pathogens. For instance, a sample can be tested for 6 to 8, 5 to 10, or 4 to 20 pathogens in accordance with any suitable principles and advantages disclosed herein.

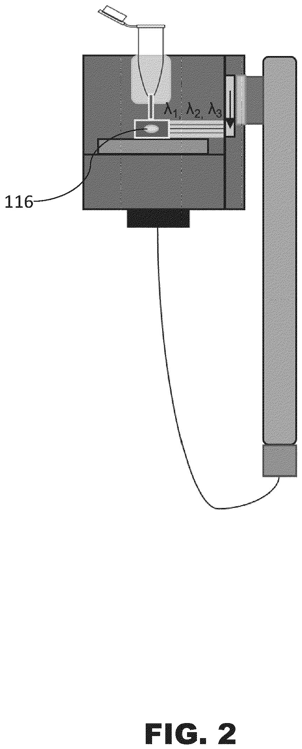

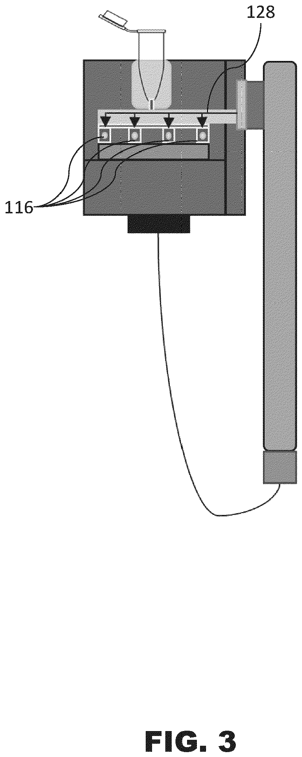

Multiplexing can be implemented in a variety of ways. In the nucleic acid amplification molecular diagnostic device 100, multiplexing can be implemented by the rotatable platform 118 mechanically moving different chambers 116 in proximity to the camera 124, where each of the chambers 116 can include a different primer for detecting a pathogen. Another method of multiplexing involves a one-pot multiplex with multiple wavelengths. More details regarding such multiplexing will be discussed with reference to FIG. 2. One more method of multiplexing involves fiber optic detection for different chambers. More details regarding fiber optic detection will be discussed with reference to FIG. 3.

**FIG. 2** illustrates another nucleic acid amplification molecular diagnostic device according to some embodiments. As shown in FIG. 2, in some embodiments, a nucleic acid amplification molecular diagnostic device 200 may include a single reaction chamber 116. In some embodiments, such a nucleic acid amplification molecular diagnostic device may be used to detect a single analyte. In some embodiments, the nucleic acid amplification molecular diagnostic device of FIG. 2 may be used to detect multiple pathogens. For example, in some embodiments, different fluorescent tags can be used to identify different pathogens. A smartphone application can be configured to process optical data (e.g., an image or images) to analyze emission at multiple wavelengths, thereby enabling the detection of multiple pathogens and/or the multiplexed detection of a single pathogen. In some embodiments, the nucleic acid amplification molecular diagnostic device 200 can include one or more optical filters to select a wavelength or range of wavelengths for analysis.

**FIG. 3** illustrates another nucleic acid amplification molecular diagnostic device according to some embodiments. In FIG 3, a nucleic acid amplification molecular diagnostic device 300 includes multiple reaction chambers 116, and light is directed into each reaction chamber 116 via fiber optic cabling 128. In some embodiments, light can be received from each reaction chamber 116 using fiber optic cabling, which may be the same as or different from the fiber optical cabling 128 used to transmit light to the reaction chambers 116. In some embodiments, light can be selectively directed to each reaction chamber 116 and/or can be selectively received from each reaction chamber 116, for example, using one or more shutters or one or more other features to selectively block and transmit light.

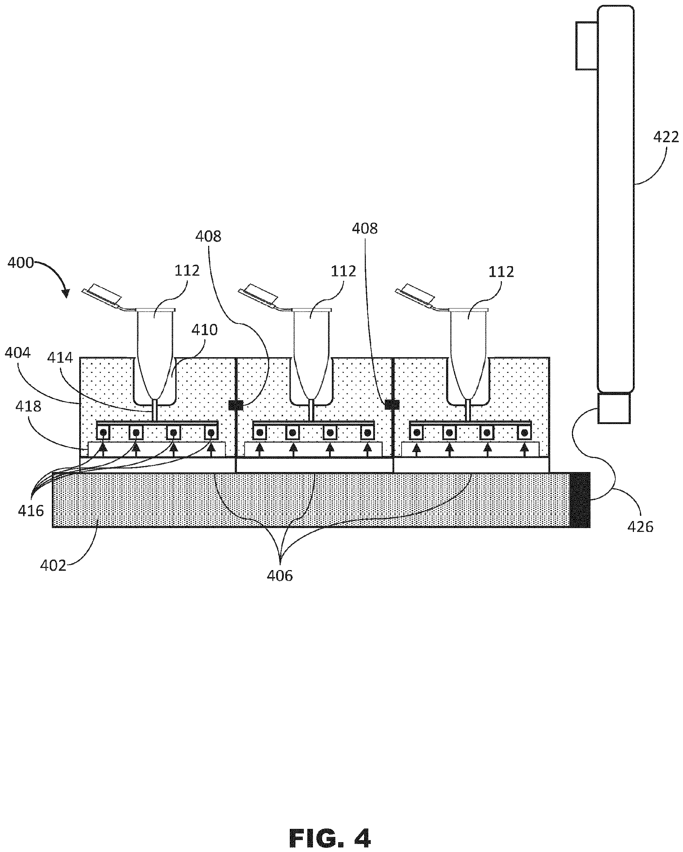

**FIG. 4** illustrates an example nucleic acid amplification molecular diagnostic device according to some embodiments. In FIG. 4, a nucleic acid amplification molecular diagnostic device 400 can include a reusable base component 402 and a disposable component 404. The reusable base component 402 can include a plurality of discrete heaters 406. The heaters 406 can be, for example, resistive heaters. Any other suitable heater can alternatively or additionally be utilized. The heaters 406 can provide isothermal heating at a certain temperature in certain applications. Alternatively or additionally, the heaters 406 can thermally cycle a sample. The heaters 406 can provide heating for rolling analysis diagnostics (RAD). RAD allows for cartridges to be added as desired without disrupting the thermal cycles of one or more neighboring cartridges. The nucleic acid amplification molecular diagnostic device 400 can advantageously allow healthcare workers to manage simultaneous and/or staggered sample intake and analysis using a single nucleic acid amplification molecular diagnostic device 400. The nucleic acid amplification molecular diagnostic device 400 may be particularly suitable for laboratory-based testing or for testing performed by healthcare professionals, where high throughput testing may be desirable. In some applications, the nucleic acid amplification molecular diagnostic device 400 can be used in a clinical setting, such as a patient room.

The disposable component 404 can include a receiving well 410 for receiving a sample container 112. When the sample container 112 is placed in the receiving well 410, fluid can flow from the sample container 112 to the reaction chambers 416 via one or more fluid connection channels 414. The reaction chambers 416 can include different primers for detecting different pathogens. The nucleic acid amplification molecular diagnostic device 400 can include multiple disposable components 404. The disposable component 404 may include an attachment 408 for forming a modular snap-grid of the disposable components 404. Using the attachments 408, a user can quickly add disposable components 404 to the nucleic acid amplification molecular diagnostic device 400 if it is desired to run additional assays. FIG. 4 depicts three disposable components 404 attached to each other via the attachments 408, although any suitable number of disposable components 404 may be included in the nucleic acid amplification molecular diagnostic device 400. In certain instances, there is an array of disposable components 404. For example, the thee disposable components 404 illustrated in FIG. 4 can be included in a three by three array of disposable components 404.

The reaction chambers 416 may include one or more sensors and/or materials for non-optical detection in accordance with the present disclosure. For example, in some embodiments, the reaction chambers 416 may include sensors capable of sensing electrical/electrochemical changes in the sample in accordance with the present disclosure.

In alternative embodiments, the disposable component 404 of the nucleic acid amplification molecular diagnostic device 400 may be capable of receiving multi-well plates rather than individual tubes as shown in FIG. 4. For example, the disposable component 404 may be capable of receiving a multi-well plate, for example a 96-well plate or a 384-well plate. Such multi-well plates may perform similar functions to that of the sample container 112. Accordingly, the wells of the multi-well plate can contain sample fluid. The wells of the multi-well plate can allow the sample fluid to flow into the one or more fluid connection channels 414 and to the reaction chambers 416. Such compatibility with multi-well plates may be desirable for high throughput testing.

The nucleic acid amplification molecular diagnostic device 400 can include a light source and detector 418 configured to emit light to the reaction chambers 416 and to receive light from the reaction chambers 416. The detector 418 may include one or more of a camera, a photodiode, or another suitable optical detector. In some embodiments, light can be selectively transmitted to and/or received from individual reaction chambers 416. For example, in the illustrated embodiment, light can be coupled into to leftmost reaction chamber 416 but may not be transmitted to one or more other reaction chambers 416. In some embodiments, light can be received from the leftmost reaction chamber 416 but may not be received from one or more of the other reaction chambers 416. In some embodiments, the coupling can result in no, substantially no, or minimal light being transmitted to or received from reaction chambers 416 other than the leftmost reaction chamber 416. The detector 418 can detect a color change in a sample to determine that the sample includes a pathogen. For example, the detector 418 can detect that a fluid in a particular chamber 416 changes from pink to yellow to indicate that a particular pathogen is present in the fluid. Color change data produced by the detector 418 may be transmitted to the external device 422, for example via the cable 426 and/or via a wireless connection. In such embodiments, the external device 422 may be capable of determining presence of a target analyte in the sample based at least in part on the color change data. In some embodiments, color change detected by the detector 418 may be transmitted to a processer internal to the reusable base component 402.

In some other embodiments, the external device 422 can perform optical detection and/or provide light. In such embodiments, the external device 422 can perform optical detection using a camera or other optical detector and/or provide light using a light source instead of the nucleic acid amplification molecular diagnostic device 400 including a light source and detector 418.

In some embodiments, the nucleic acid amplification molecular diagnostic device 400 can be electrically connected to the external device 422 by a cable 426. The cable 426 can be, for example, a USB cable, Lightning cable, and/or the like. In some embodiments, the cable 426 can be used to provide power to the nucleic acid amplification molecular diagnostic device 400, for example, to provide power to the heater 406. In some other embodiments, the nucleic acid amplification molecular diagnostic device 400 may be supplied power from a dedicated battery (for example in the reusable base component 402) and/or a wall socket. In such embodiments, the cable 426 may only communicate information and/or commands to and from the external device 422 and the reusable base component 402. In some embodiments, power (e.g., power from a battery of the nucleic acid amplification molecular diagnostic device 400, power from a wall socket in electrical communication with the nucleic acid amplification molecular diagnostic device 400, or power transmitted via the cable 426) can be provided to one or more other components of the nucleic acid amplification molecular diagnostic device 400. For example, the nucleic acid amplification molecular diagnostic device 400 can include one or more motors, control circuits, communications circuits (e.g., a wireless communications interface, for example Wi-Fi, Bluetooth, and so forth).

In some embodiments, the cable 426 may not be present. For example, in some embodiments, the reusable base component 402 may communicate wirelessly with the external device 422. In some such embodiments, the nucleic acid amplification molecular diagnostic device 400 can wirelessly communicate with the external device 422 (e.g., a smartphone) via a wireless communication interface (not illustrated). The wireless communication interface can be disposed in, for example, the reusable base component 402. In some embodiments, alternatively or additionally, the nucleic acid amplification molecular diagnostic device 400 can be in communication with the external device 422 via a wired connection, such as via the cable 426.

The external device 422 may be any suitable device capable of communicating with the reusable base component 402. In some embodiments, the external device 422 is a mobile device, smartphone, table, or personal computing device. The external device 422 can be any suitable device having a processor and capable of performing the functions of an external device discussed herein.

Multiplexing can be implemented in a variety of ways using the nucleic acid amplification molecular diagnostic device 400. Multiplexing can be implemented by the including a different primer for detecting a pathogen in each of the chambers 416, where there is a separate detector 418 associated with each reaction chambers 416. Another method of multiplexing involves a one-pot multiplex with multiple wavelengths, where multiple primers causing different color changes can be included in a single reaction chamber 416, similarly to the approach discussed with reference to FIG. 2.

In some cases, bubbles may form in a reaction chamber, for example resulting from the flow of the sample into the reaction chamber, as a result of the reaction process (e.g., as a result of heating and/or reactions taking place within the reaction chamber). The presence of bubbles may complicate analysis. Thus, in some embodiments, bubble mitigation techniques may be used. For example, in some embodiments, the reaction chamber and/or the test tube or other sample container may contain an inert chemical for bubble mitigation. The inert chemical may be, for example, polypropylene glycol).

While described herein with respect to testing for infectious diseases, it will be appreciated that the nucleic acid amplification molecular diagnostic devices disclosed herein can be used for other types of testing, such as environmental monitoring.

In the embodiments described above, apparatus, systems, and methods for molecular diagnostic detection are described in connection with particular embodiments. It will be understood, however, that the principles and advantages of the embodiments can be used for any other systems, apparatus, or methods with a need for molecular diagnostic detection.

Unless the context clearly requires otherwise, throughout the description and the claims, the words "comprise," "comprising," "include," "including," and the like are to be construed in an inclusive sense, as opposed to an exclusive or exhaustive sense; that is to say, in the sense of "including, but not limited to." Additionally, the words "herein," "above," "below," and words of similar import, when used in this application, shall refer to this application as a whole and not to any particular portions of this application. Where the context permits, words in the Detailed Description using the singular or plural number may also include the plural or singular number, respectively. The word "or" in reference to a list of two or more items, is intended to cover all of the following interpretations of the word: any of the items in the list, all of the items in the list, and any combination of the items in the list. All numerical values provided herein are intended to include similar values within a measurement error.

Moreover, conditional language used herein, such as, among others, "can," "could," "might," "may," "e.g.," "for example," "such as" and the like, unless specifically stated otherwise, or otherwise understood within the context as used, is generally intended to convey that certain embodiments include, while other embodiments do not include, certain features, elements and/or states.

The teachings provided herein can be applied to other systems, not necessarily the systems described above. The elements and acts of the various embodiments described above can be combined to provide further embodiments. The acts of the methods discussed herein can be performed in any order as appropriate. Moreover, the acts of the methods discussed herein can be performed serially or in parallel, as appropriate.

While certain embodiments have been described, these embodiments have been presented by way of example only, and are not intended to limit the scope of the disclosure. Indeed, the novel methods and systems described herein may be embodied in a variety of other forms. Furthermore, various omissions, substitutions and changes in the form of the methods and systems described herein may be made without departing from the spirit of the disclosure. For example, while the disclosed embodiments are presented in given arrangements, alternative embodiments may perform similar functionalities with different components and/or circuit topologies, and some elements may be deleted, moved, added, subdivided, combined, and/or modified. Each of these elements may be implemented in a variety of different ways as suitable. Any suitable combination of the elements and acts of the various embodiments described above can be combined to provide further embodiments. The accompanying claims and their equivalents are intended to cover such forms or modifications as would fall within the scope and spirit of the disclosure. Accordingly, the scope of the present inventions is defined by reference to the claims.

### Numbered aspects

By way of non-limiting example, some aspects of the disclosure are set out in the following numbered clauses.
Numbered Clause 1. A nucleic acid amplification test molecular diagnostic device comprising:
   a reusable base component comprising a heater; and
   a disposable component comprising a reaction chamber and a sample receiving portion fluidly coupled to the reaction chamber;
   wherein the nucleic acid amplification test molecular diagnostic device is configured to heat a fluid within the reaction chamber with the heater,
   wherein the nucleic acid amplification test molecular diagnostic device is configured to direct light from a light source to the reaction chamber, and
   wherein the nucleic acid amplification test molecular diagnostic device is configured to transmit light from the disposable component to an optical detector.
Numbered Clause 2. The nucleic acid amplification test molecular diagnostic device of Numbered Clause 1, wherein an external device comprises the light source and the optical detector, the optical detector is a camera, and the light source and the camera are in optical communication with the reaction chamber via a light transmission path of the reusable base component.
Numbered Clause 3. The nucleic acid amplification test molecular diagnostic device of Numbered Clause 2, further comprising an electrical connection interface, the electrical connection interface configured to connect to the external device.
Numbered Clause 4. The nucleic acid amplification test molecular diagnostic device of Numbered Clause 3, wherein the reusable base component is configured to receive power from the external device via the electrical connection interface.
Numbered Clause 5. The nucleic acid amplification test molecular diagnostic device of any of Numbered Clauses 2 to 4, further comprising a wireless communications interface configured to communicate with the external device.
Numbered Clause 6. The nucleic acid amplification test molecular diagnostic device of any preceding Numbered Clause, wherein the disposable component comprises an attachment portion configured to attach to an additional disposable component, wherein the reusable base component is configured to receive a plurality of disposable components, wherein the plurality of disposable components comprise the disposable component, wherein the reusable base component comprises the light source and the optical detector, and wherein the optical detector is configured to transmit data to an external device.
Numbered Clause 7. The nucleic acid amplification test molecular diagnostic device of any preceding Numbered Clause, further comprising a sensor configured to sense a change in a sample in the reaction chamber.
Numbered Clause 8. The nucleic acid amplification test molecular diagnostic device of Numbered Clause 7, wherein the sensor is an electrochemical sensor.
Numbered Clause 9. The nucleic acid amplification test molecular diagnostic device of any preceding Numbered Clause, further comprising a waveguide configured to direct light from the light source to the reaction chamber.
Numbered Clause 10. The nucleic acid amplification test molecular diagnostic device of Numbered Clause 9, wherein the waveguide is further configured to direct light from the reaction chamber to the optical detector.
Numbered Clause 11. The nucleic acid amplification test molecular diagnostic device of any preceding Numbered Clause, wherein the disposable component comprises a plurality of reaction chambers, and wherein the plurality of reaction chambers comprise the reaction chamber.
Numbered Clause 12. The nucleic acid amplification test molecular diagnostic device of any preceding Numbered Clause, further comprising:
   a rotatable platform, and
   at least one additional reaction chamber,
   wherein the reaction chamber and the at least one additional reaction chamber are disposed on a top surface of the rotatable platform.
Numbered Clause 13. The nucleic acid amplification test molecular diagnostic device of any preceding Numbered Clause, further comprising:
   a plurality of fiber optic cables, and
   at least one additional reaction chamber,
   wherein each one of the plurality of fiber optic cables is optically coupled to a corresponding one of the reaction chambers.
Numbered Clause 14. The nucleic acid amplification test molecular diagnostic device of any preceding Numbered Clause, wherein the heater is configured to maintain a set temperature for a set time.
Numbered Clause 15. The nucleic acid amplification test molecular diagnostic device of any preceding Numbered Clause, wherein the heater is configured to provide variable heat output for thermal cycling.
Numbered Clause 16. A method for performing a diagnostic test, the method comprising:
   receiving, by a nucleic acid amplification molecular diagnostic device, an indication from an external device to turn on a heater of the nucleic acid amplification molecular diagnostic device;
   turning on, by the nucleic acid amplification molecular diagnostic device, the heater of the nucleic acid amplification molecular diagnostic device;
   receiving, by the nucleic acid amplification molecular diagnostic device from the external device, an indication to turn off the heater of the nucleic acid amplification molecular diagnostic device; and
   turning off, by the nucleic acid amplification molecular diagnostic device, the heater of the nucleic acid amplification molecular diagnostic device.
Numbered Clause 17. The method of Numbered Clause 16, further comprising:
   sensing, by a sensor of the nucleic acid amplification molecular diagnostic device from the external device, a change in a sample in a reaction chamber of the nucleic acid amplification molecular diagnostic; and
   providing an indication of the change in the sample to the external device.
Numbered Clause 18. The method of Numbered Clause 16 or 17, further comprising:
   receiving, by the nucleic acid amplification molecular diagnostic device from the external device, an indication to rotate a rotatable platform of the nucleic acid amplification molecular diagnostic device; and
   providing power to a motor to cause the rotatable platform to rotate.
Numbered Clause 19. The method of any of Numbered Clauses 16 to 18, further comprising:
   receiving, from the external device, light from a light source of the external device; and
   transmitting, from the nucleic acid amplification molecular diagnostic device to a camera element of the external device, light, the light passing through a reaction chamber of the nucleic acid amplification molecular diagnostic device.
Numbered Clause 20. A method for performing a diagnostic test, the method comprising:
   controlling, by an external device, a heating element of reusable component of a nucleic acid amplification molecular diagnostic device to heat a fluid in a sample chamber of a disposable component of the nucleic acid amplification molecular diagnostic device;
   providing, by the external device, light to the nucleic acid amplification molecular diagnostic device for illuminating the fluid in the sample chamber; and
   detecting, with a camera of the external device, a change in color of the fluid, wherein the change in color is associated with the fluid comprising a particular pathogen.

## Claims

1. A nucleic acid amplification test molecular diagnostic device comprising:
a reusable base component comprising a heater; and
a disposable component comprising a reaction chamber and a sample receiving portion fluidly coupled to the reaction chamber;
wherein the nucleic acid amplification test molecular diagnostic device is configured to heat a fluid within the reaction chamber with the heater,
wherein the nucleic acid amplification test molecular diagnostic device is configured to direct light from a light source to the reaction chamber, and
wherein the nucleic acid amplification test molecular diagnostic device is configured to transmit light from the disposable component to an optical detector.

2. The nucleic acid amplification test molecular diagnostic device of Claim 1, wherein an external device comprises the light source and the optical detector, the optical detector is a camera, and the light source and the camera are in optical communication with the reaction chamber via a light transmission path of the reusable base component,
preferably wherein the nucleic acid amplification test molecular diagnostic device further comprises an electrical connection interface, the electrical connection interface configured to connect to the external device,
more preferably wherein the reusable base component is configured to receive power from the external device via the electrical connection interface.

3. The nucleic acid amplification test molecular diagnostic device of Claim 2, further comprising a wireless communications interface configured to communicate with the external device.

4. The nucleic acid amplification test molecular diagnostic device of any preceding Claim, wherein the disposable component comprises an attachment portion configured to attach to an additional disposable component, wherein the reusable base component is configured to receive a plurality of disposable components, wherein the plurality of disposable components comprise the disposable component, wherein the reusable base component comprises the light source and the optical detector, and wherein the optical detector is configured to transmit data to an external device.

5. The nucleic acid amplification test molecular diagnostic device of any preceding Claim, further comprising a sensor configured to sense a change in a sample in the reaction chamber, preferably wherein the sensor is an electrochemical sensor.

6. The nucleic acid amplification test molecular diagnostic device of any preceding Claim, further comprising a waveguide configured to direct light from the light source to the reaction chamber, preferably wherein the waveguide is further configured to direct light from the reaction chamber to the optical detector.

7. The nucleic acid amplification test molecular diagnostic device of any preceding Claim, wherein the disposable component comprises a plurality of reaction chambers, and wherein the plurality of reaction chambers comprise the reaction chamber.

8. The nucleic acid amplification test molecular diagnostic device of any preceding Claim, further comprising:
a rotatable platform, and
at least one additional reaction chamber,
wherein the reaction chamber and the at least one additional reaction chamber are disposed on a top surface of the rotatable platform.

9. The nucleic acid amplification test molecular diagnostic device of any preceding Claim, further comprising:
a plurality of fiber optic cables, and
at least one additional reaction chamber,
wherein each one of the plurality of fiber optic cables is optically coupled to a corresponding one of the reaction chambers.

10. The nucleic acid amplification test molecular diagnostic device of any preceding Claim, wherein the heater is configured to maintain a set temperature for a set time and/or wherein the heater is configured to provide variable heat output for thermal cycling.

11. A method for performing a diagnostic test, the method comprising:
receiving, by a nucleic acid amplification molecular diagnostic device, an indication from an external device to turn on a heater of the nucleic acid amplification molecular diagnostic device;
turning on, by the nucleic acid amplification molecular diagnostic device, the heater of the nucleic acid amplification molecular diagnostic device;
receiving, by the nucleic acid amplification molecular diagnostic device from the external device, an indication to turn off the heater of the nucleic acid amplification molecular diagnostic device; and
turning off, by the nucleic acid amplification molecular diagnostic device, the heater of the nucleic acid amplification molecular diagnostic device.

12. The method of Claim 11, further comprising:
sensing, by a sensor of the nucleic acid amplification molecular diagnostic device from the external device, a change in a sample in a reaction chamber of the nucleic acid amplification molecular diagnostic; and
providing an indication of the change in the sample to the external device.

13. The method of Claim 11 or 12, further comprising:
receiving, by the nucleic acid amplification molecular diagnostic device from the external device, an indication to rotate a rotatable platform of the nucleic acid amplification molecular diagnostic device; and
providing power to a motor to cause the rotatable platform to rotate.

14. The method of any of Claims 11 to 13, further comprising:
receiving, from the external device, light from a light source of the external device; and
transmitting, from the nucleic acid amplification molecular diagnostic device to a camera element of the external device, light, the light passing through a reaction chamber of the nucleic acid amplification molecular diagnostic device.

15. A method for performing a diagnostic test, the method comprising:
controlling, by an external device, a heating element of reusable component of a nucleic acid amplification molecular diagnostic device to heat a fluid in a sample chamber of a disposable component of the nucleic acid amplification molecular diagnostic device;
providing, by the external device, light to the nucleic acid amplification molecular diagnostic device for illuminating the fluid in the sample chamber; and
detecting, with a camera of the external device, a change in color of the fluid, wherein the change in color is associated with the fluid comprising a particular pathogen.
